# EUROPÄISCHE PATENTANMELDUNG

(11) **EP 0 897 868 A1**
(43) Veröffentlichungstag der Anmeldung: **24.02.1999**
(21) Anmeldenummer: 98111275.8
(22) Anmeldetag: 18.06.1998
(51) Int. Cl.: B65B 51/30

(54) **Vorrichtung zum Querverschweissen eines Folienschlauches**

(30) Priorität: 16.08.1997 DE 19735705; 19.12.1997 DE 19756713; 31.01.1998 DE 19803876; 20.03.1998 DE 19812359
(71) Anmelder: Rovema Verpackungsmaschinen GmbH, 35463 Fernwald (DE)
(72) Erfinder: Kammler, Roman, Dr., 67547 Worms (DE); Kuss, Gerhard, 35584 Wetzlar (DE); Baur, Walter, Dr., 63584 Gründau (DE)

(57) **Zusammenfassung**

Bei einer Vorrichtung (1) zum Verschweißen eines Folienschlauches (2) quer zu seiner Transportrichtung (3) laufen Quersiegelbacken (4) eines Backenstocks (10) entgegengesetzt zueinander um. Oberhalb der Quersiegelbacken (4) ist ein Produktrückhalter (18) mit gegeneinander und gegen den Folienschlauch (2) bewegbaren, den Folienschlauch (2) einklemmenden Rückhalteelementen (20) vorgesehen. Der Produktrückhalter (18) verhindert, daß ein zu verpackendes Produkt zu früh eine gerade verschweißte, noch warme Bodennaht (15) eines zu verschweißenden Beutels (14) belastet.

Der Produktrückhalter (18) weist zwei gegenläufg an jeweils einem Arm (55) um jeweils eine Achse (50) rotierende Rückhalteelemente (20) auf. Die Arme (55) sind als Teleskoparme (56) ausgestaltet, welche mittels einer Feder (57) rückstellbar sind. Die Teleskoparme (56) erlauben ein frühzeitiges Anlegen der Rückhalteelemente (20) an den Folienschlauch.

## Beschreibung

Die Erfindung betrifft eine Vorrichtung zum Verschweißen eines Folienschlauches quer zu seiner Transportrichtung, mit zwei um jeweils eine Achse entgegengesetzt umlaufenden Quersiegelbacken eines Backenstocks, einer Trenneinrichtung an einer Quersiegelbacke zum Durchtrennen des Folienschlauches zwischen jeweils einer Kopfnaht eines Beutels und einer Bodennaht eines nachfolgenden Beutels, einem Füllrohr zum Aufnehmen und Befüllen des Folienschlauches, einer gegen den Folienschlauch wirkenden Folientransporteinrichtung, sowie einem Produktrückhalter mit gegeneinander und gegen den Folienschlauch beweglichen Rückhalteelementen oberhalb der Quersiegelbacken.

Bei einer bekannten Vorrichtung dient ein an einem umlaufenden Band befestigter Produktrückhalter dazu, eine in den Folienschlauch gefüllte Produktportion zurückzuhalten, so daß sie nicht nach unten fällt, bevor die Quersiegelbacken geschlossen sind, um den Folienschlauch quer zu verschweißen. Auf diese Weise wird verhindert, daß Produkt in eine Quernaht gelangt und dort zu einer undichten Stelle führt.

Die bekannte Vorrichtung hat den Nachteil, daß der technische Aufwand für die Realisierung des Produktrückhalters relativ groß ist. Das geschlossene Band muß aufwendig geführt werden. Zudem kann das Band nach längerer Betriebsdauer eine ungewünschte Längendehnung erfahren, was zu einem ungenauen Rückhalten führt.

Der Erfindung liegt die Aufgabe zu Grunde, bei einer Vorrichtung der eingangs beschriebenen Art den technischen Aufwand für den Produktrückhalter zu verringern, wobei dieser auch nach längerer Betriebsdauer sehr genau positionierbar ist.

Gelöst ist die Aufgabe gemäß dem kennzeichnenden Teil des Anspruchs 1. Danach weist der Produktrückhalter zwei gegenläufig an jeweils einem Arm um jeweils eine Achse rotierende Rückhalteelemente auf, und als Arm des Rückhalteelementes ist ein Teleskoparm vorgesehen, der mittels einer Feder radial zu seiner Achse rückstellbar ist.

Die Erfindung hat den Vorteil, daß der technische Aufwand für den Produktrückhalter verringert ist und der Produktrückhalter auch nach längerer Betriebsdauer sehr genau positionierbar ist.

Der Teleskoparm erlaubt eine selbsttätige Anpassung des Produktrückhalters von gegenüberliegenden Seiten an den Folienschlauch und ein sicheres Rückhalten von im Folienschlauch befindlichem Produkt oberhalb der Quersiegelbacken. Während ihrer Abwärtsbewegung stauchen sich die Teleskoparme und passen sich den kleiner werdenden Abständen zwischen dem Folienschlauch und den Achsen an. Nach dem Rückhaltevorgang strecken sich die Teleskoparme, um den nächsten Rückhaltevorgang möglichst frühzeitig beginnen zu können. Durch diesen frühen Rückhaltezeitpunkt kann eine neue Produktportion früher als bei den bisher bekannten Produktrückhaltein in den Folienschlauch geworfen werden, wodurch der Produktabwurf weniger als bisher der limitierende Faktor für die Verpackungsgeschwindigkeit ist, und die Verpackungsgeschwindigkeit kann erhöht werden.

Ist der Produktrückhalter über ein Koppelglied derart mit dem Backenstock verbunden, daß eine Rotationsbewegung des Backenstocks den Produktrückhalter öffnet und schließt (Anspruch 2) so entfällt ein separater Antrieb für den Produktrückhalter, da die Rotationsbewegung des Backenstocks den Produktrückhalter betätigt. Ein weiterer Vorteil besteht darin, daß der Produktrückhalter dabei synchron zum Backenstock bewegt wird.

Gelöst ist die Aufgabe gemäß dem kennzeichnenden Teil des Anspruchs 1. Ist der Antrieb des Produktrückhalters über ein elektronisches Koppelglied mit dem Antrieb des Backenstocks verbunden (Anspruch 4), so hat dies den Vorteil, daß der Produktrückhalter ohne mechanische Kopplung derart synchron zum Backenstock bewegt werden kann, daß die Rückhaltefunktion des Produktrückhalters genau dann einsetzt, wenn sich die Quersiegelbacken dem Folienschlauch nähern, um einen Schweißvorgang auszuführen. Beim Zusammendrücken des Folienschlauches befindet sich somit kein Produktteil direkt oberhalb der Quersiegelbacken oder zwischen diesen, so daß in zuverlässiger Weise dichte Quernähte erzeugt werden.

Im folgenden wird die Erfindung an Hand von Figuren näher beschrieben. Es zeigt:
- Figur 1: in einer Seitenansicht ein Ausführungsbeispiel der Erfindung, wobei ein teleskopartiger Produktrückhalter über einen um zwei Scheiben umlaufenden Riemen mit den Quersiegelbacken mitbewegt wird, sowie
- Figur 2: in einem Schnitt entlang B-B der Figur 1 den Gegenstand der Figur 1.
- Figur 3: in einer Seitenansicht eine Vorrichtung zum Verschweißen eines Folienschlauches, mit zwei von einem Antrieb gegenläufig angetriebenen Quersiegelbacken eines Backenstocks, einer Trenneinrichtung an einer Quersiegelbacke, einem von einem weiteren Antrieb angetriebenen Produktrückhalter mit gegeneinander und gegen den (nicht dargestellten) Folienschlauch beweglichen, rückstellbaren Rückhalteelementen oberhalb der Quersiegelbacken, und einem elektronischen Koppelglied zwischen den beiden Antrieben;
- Figur 4: in einem Schnitt entlang B-B der Figur 3 den Gegenstand der Figur 3;
- Figur 5: in einer Seitenansicht zwei Rückhalteelemente aus deformierbarem Material während ihrer Rückhaltefunktion an einem zusammengedrückten Folienschlauch;
- Figur 6: in einer Seitenansicht einen Gegenstand analog Figur 5, jedoch mit rechteckigen, nicht deformierbaren Rückhalteelementen;
- Figur 7: in einer Seitenansicht den Gegenstand der Figur 1, jedoch mit einer kreisförmigen Scheibe und einer Scheibe in Form eines Ellipsoids, sowie
- Figur 8: in einer Seitenansicht den Gegenstand der Figur 7, jedoch mit vertauschten Scheiben.

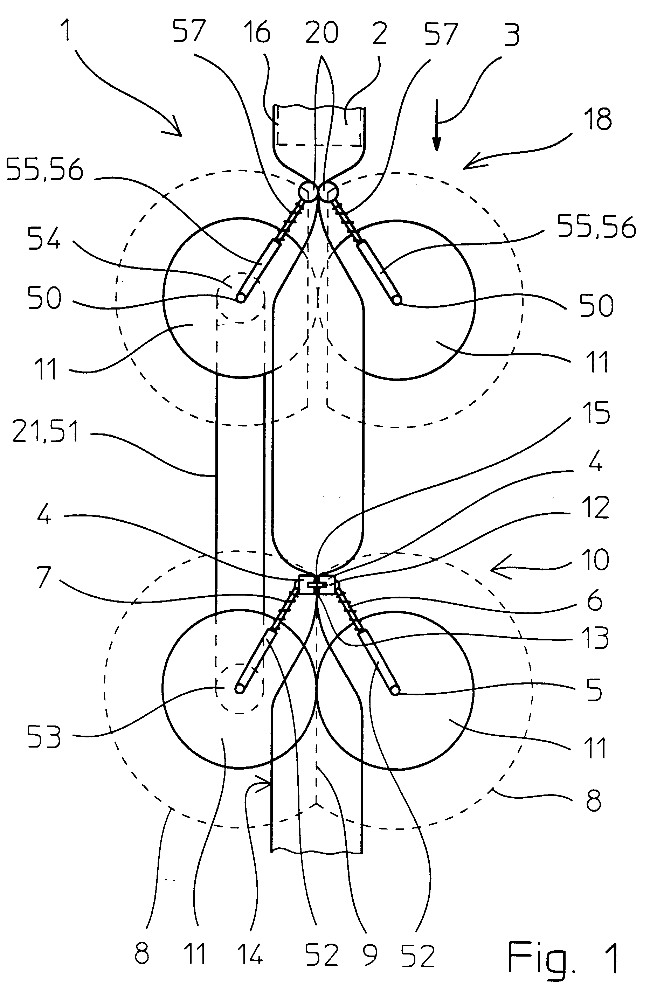

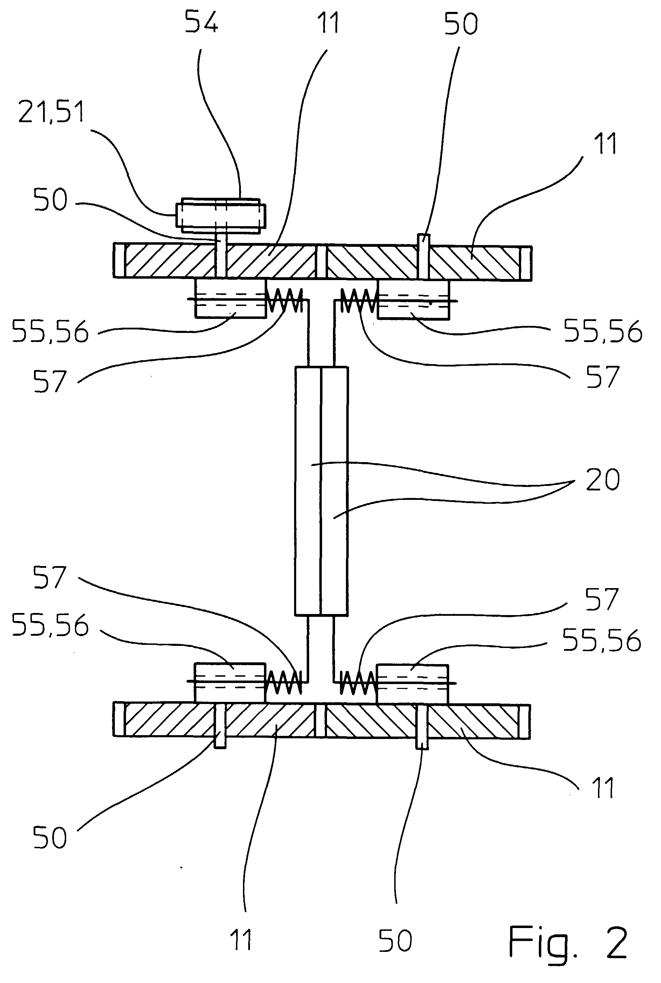

Bei einer Vorrichtung 1 zum Verschweißen eines Folienschlauches 2 quer zu seiner Transportrichtung 3 laufen zwei Quersiegelbacken 4 entgegengesetzt zueinander um jeweils eine Achse 5 um (Figur 1, Figur 2). Die Quersiegelbacken 4 sind über jeweils eine Teleskopverbindung 6 gehalten. Die Teleskopverbindungen 6 weisen eine Feder 7 auf, die eine Längenänderung der Teleskopverbindung 6 während ihres kontinuierlichen Umlaufs erlaubt. Jede Quersiegelbacke 4 beschreibt eine D-förmige Bahn 8. Entlang des geraden Abschnitts 9 der Bahnen 8 erfolgt eine Verschweißung des bewegten Folienschlauches 2.

Die Quersiegelbacken 4 des Backenstocks 10 laufen infolge eines ineinander Eingreifens mit ihnen verbundener Zahnräder 11 in zueinander entgegengesetzter Richtung um.

In einer Quersiegelbacke 4 ist eine Trenneinrichtung 12 zum Durchtrennen des Folienschlauches 2 zwischen jeweils einer Kopfnaht 13 eines Beutels 14 und einer Bodennaht 15 eines nachfolgenden Beutels vorgesehen.

Ein Füllrohr 16 dient der Aufnahme und dem Befüllen des Folienschlauches 2. Der Weitertransport des Folienschlauches 2 geschieht mittels einer gegen den Folienschlauch 2 und das Füllrohr 16 wirkenden (nicht dargestellten) Folientransporteinrichtung.

Oberhalb der Quersiegelbacken 4 ist ein Produktrückhalter 18 mit gegeneinander und gegen den Folienschlauch 2 beweglichen Rückhalteelementen 20 vorgesehen.

Der Produktrückhalter 18 ist über ein Koppelglied 21 derart mit dem Backenstock 10 verbunden, daß die Rotationsbewegung des Backenstocks 10 den Produktrückhalter 18 öffnet und schließt.

Der Produktrückhalter 18 führt ebenso wie die Quersiegelbacken 4 D-Kurven aus und ist damit in seinem Produktrückhalteverhalten derart gut an die Backenbewegung angepaßt, daß er zeitgenau mit der Backenbewegung seine Rückhaltefunktion erfüllt. Der Produktrückhalter 18 kann während eines kontinuierlichen Weitertransports des Folienschlauches 2 eingesetzt werden, wodurch eine sehr große Verpackungsgeschwindigkeit erzielbar ist. Der Produktrückhalter 18 verhindert, daß zu verpackendes Produkt zu früh eine noch warme Bodennaht 15 erreicht.

Der Produktrückhalter 18 weist zwei gegenläufig um jeweils eine Achse 50 rotierende Rückhalteelemente 20 auf. Die Gegenläufigkeit der Rückhalteelemente 20 wird analog zur Gegenläufigkeit der Quersiegelbacken 4 durch ineinandergreifende Zahnräder 11 erreicht. Als Koppelglied 21 zwischen der Quersiegelbackenbewegung und der Bewegung der Rückhalteelemente 20 ist ein geschlossener Riemen 51, der einerseits um eine mit einem Arm 52 einer Quersiegelbacke 4 starr verbundene Scheibe 53 umläuft, und andererseits um eine Scheibe 54 gleichen Durchmessers, welche starr mit einem Arm 55 eines Rückhalteelementes 20 verbunden ist. Der Arm 55 des Rückhalteelementes 20 ist ein Teleskoparm 56, der mittels einer Feder 57 radial zu seiner Achse 50 rückstellbar ist.

Als Rückhalteelement 20 kann eine Stange aus einem deformierbaren Material 61 vorgesehen sein. Dadurch schließt der Produktrückhalter 18 wesentlich sicherer und unabhängiger von allen Fertigungsgenauigkeiten, als wenn das Material nicht deformierbar wäre. Die Stangen sind nicht um ihre Längsachse drehbar, wodurch sie den eingeklemmten Folienschlauch 2 nicht durchrollen lassen, und ihre Rückhaltefunktion sicherer ausüben. Nicht drehbare Stangen während ihrer Rückhaltefunktion sind auch erreicht, wenn sie einen eckigen Querschnitt aufweisen.

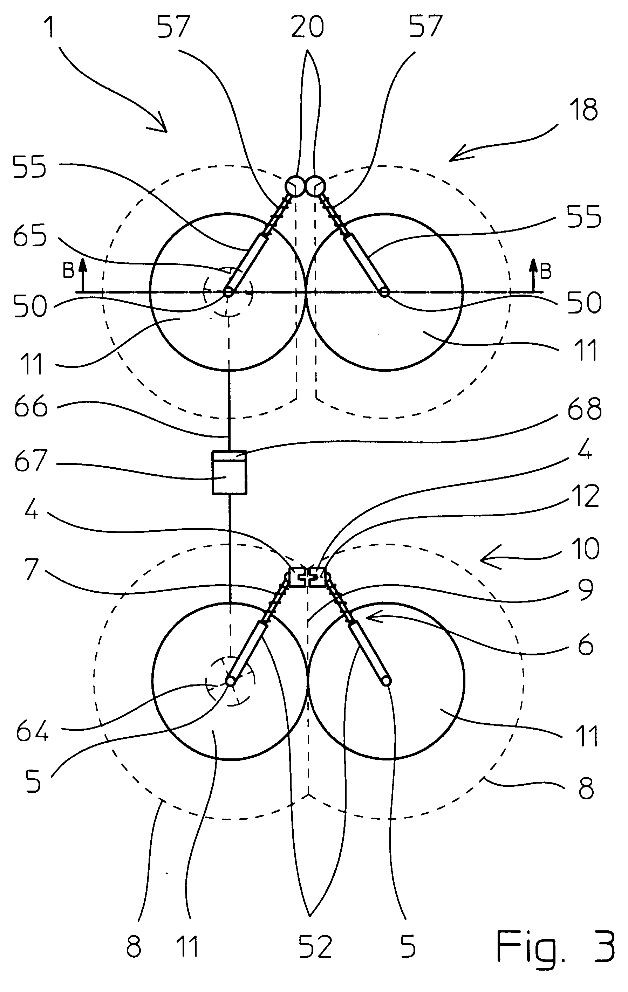

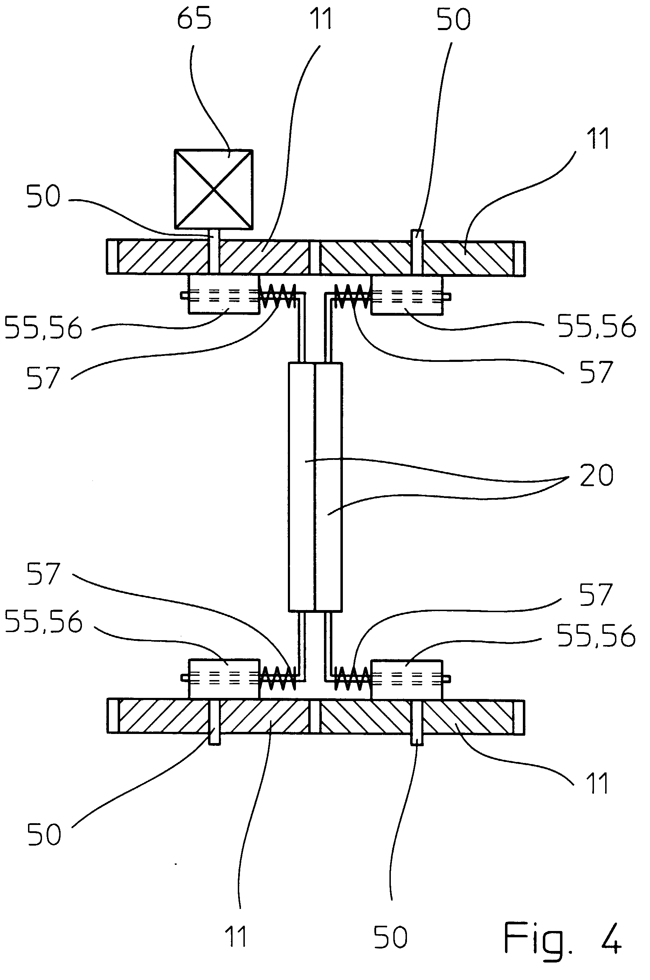

Der Antrieb 65 des Produktrückhalters 18 kann auch über ein elektronisches Koppelglied 67 und eine Leitung 66 mit dem Antrieb 64 des Backenstocks 10 verbunden sein, so daß bei einer Rotationsbewegung des Backenstocks 10 der Produktrückhalter 18 analog zur Schließbewegung der Quersiegelbacken 4 geöffnet oder geschlossen wird (Figur 3, Figur 4). Dabei kann auch eine Phasenverschiebung zwischen der Rotation des Produktrückhalters 18 und der Quersiegelbacken 4 in einer Phasenverschiebungseinrichtung 68 vorgewählt sein, um den Produktrückhalter 18 schon zu schließen, bevor die Quersiegelbacken eine Folienverschweißung ausführen. Damit ist gewährleistet, daß keine Produktteile in eine Kopfnaht 13 oder eine Bodennaht 15 gelangen können.

Der Produktrüchhalter 18 führt ebenso wie die an Armen 52 befestigten Quersiegelbacken 4 D-Kurven aus und ist damit in seinem Produktrückhalteverhalten gut an die Backenbewegung angepaßt. Der Produktrückhalter 18 kann während eines kontinuierlichen Weitertransports des Folienschlauches 2 eingesetzt werden, wodurch eine sehr große Verpackungsge-schwindigkeit erzielbar ist. Der Produktrückhalter 18 verhindert auch, daß zu verpackendes Produkt zu früh eine noch warme Bodennaht 15 erreicht.

Der Produktrückhalter 18 weist zwei gegenläufig um jeweils eine Achse 50 rotierende Rückhalteelemente 20 auf. Die Gegenläufigkeit der Rückhalteelemente 20 wird analog zur Gegenläufigkeit der Quersiegelbacken 4 durch ineinandergreifende Zahnräder 11 erreicht. Der Arm 55 des Rückhalteelementes 20 ist ein Teleskoparm, der mittels einer Feder 57 radial zu seiner Achse 50 rückstellbar ist. Seitliche Begrenzungen 59 verhindern ein Verschwenken des Arms 55.

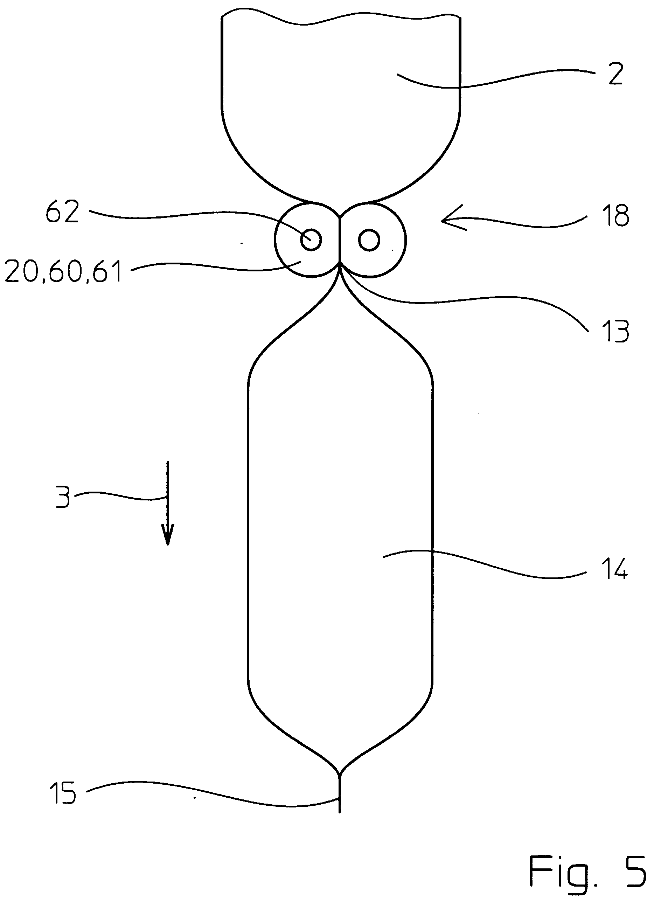

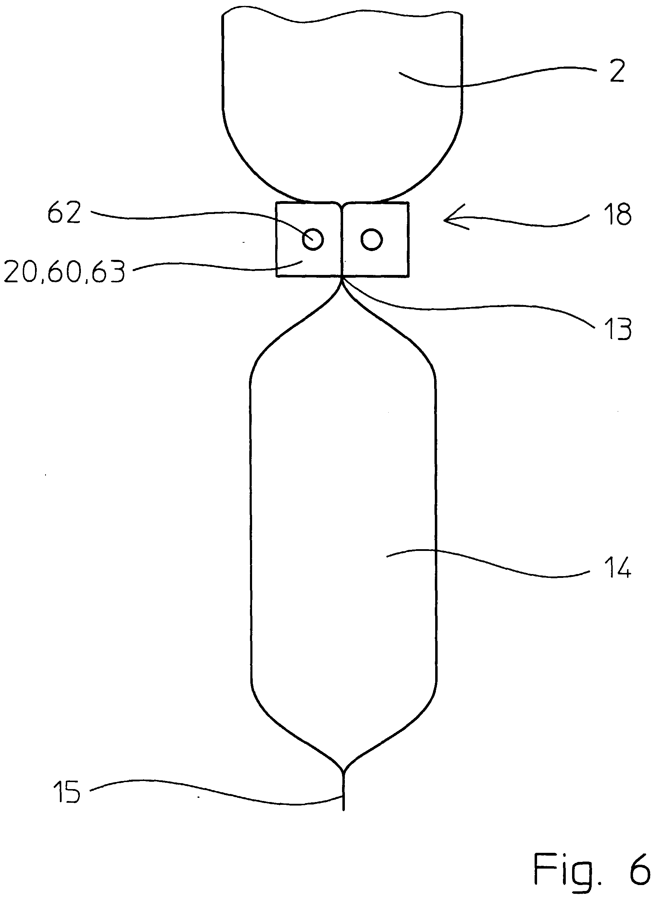

Als Rückhalteelement 20 kann eine Stange 60 aus einem deformierbaren Material 61 vorgesehen sein (Figur 5). Dadurch schließt der Produktrückhalter 18 wesentlich sicherer und unabhängiger von allen Fertigungsgenauigkeiten, als wenn das Material nicht deformierbar wäre. Die Stangen 60 sind nicht um ihre Längsachse 62 drehbar, wodurch sie den eingeklemmten Folienschlauch 2 nicht durchrollen lassen, und ihre Rückhaltefunktion sicherer ausüben. Nicht drehbare Stangen 60 während ihrer Rückhaltefunktion sind auch erreicht, wenn sie einen eckigen Querschnitt 63 aufweisen (Figur 6).

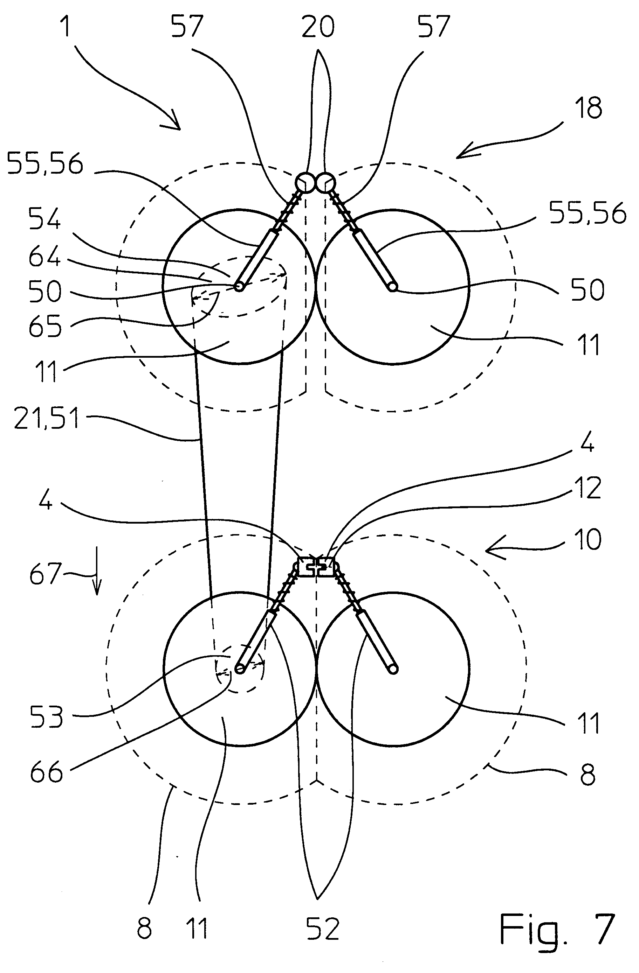

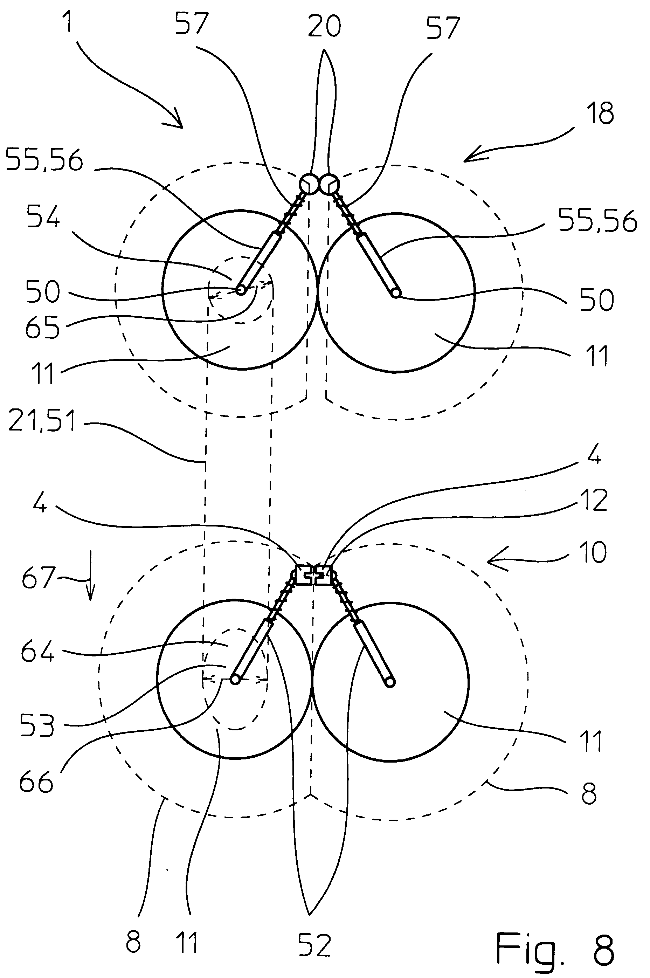

Bei der Vorrichtung nach Figur 7 ist die Scheibe 53 kreisförmig und die andere Scheibe 54 als Ellipsoid 64 ausgestaltet. Bei der Vorrichtung nach Figur 8 ist dagegen die Scheibe 53 als Ellipsoid 64 und die Scheibe 54 kreisförmig ausgestaltet. Die Scheiben 53, 54 haben jeweils gleichen Umgang. Bei den Ausführungsbeispielen ist gemeinsam, daß im (zeichnerisch dargestellten) Zeitpunkt des Gegeneinanderstoßens der Rückhalteelemente 20 der senkrecht zur Folientransportrichtung 67 gemessene Durchmesser 65 der Scheibe 54 des Produktrückhalters 18 größer als der entsprechende Durchmesser 66 der Scheibe 53 der Quersiegelbacken 4 ist. Dies bedingt, daß die Winkelgeschwindigkeit der Rückhalteelemente 20 entlang ihres Rückhalteweges (gerader Abschnitt der D-förmigen Bahn) kleiner ist als die Winkelgeschwindigkeit der Quersiegelbacken 4 während deren gerader Kontaktstrecke der D-förmigen Bahn 8. Der Vorteil der kleineren Winkelgeschwindigkeit der Rückhalteelemente 20 liegt darin, daß die Rückhaltedauer größer als die Siegeldauer ist, und somit eine frisch verschweißte Siegelnaht länger abkühlen kann, bevor sie von einem Produkt belastet wird. Dadurch werden undichte, durch Produkt in noch warmen Zustand aufgetrennte Siegelnähte sicher vermieden.

## Patentansprüche

1. Vorrichtung zum Verschweißen eines Folienschlauches quer zu seiner Transportrichtung, mit zwei um jeweils eine Achse entgegengesetzt umlaufenden Quersiegelbacken eines Backenstocks, einer Trenneinrichtung an einer Quersiegelbacke zum Durchtrennen des Folienschlauches zwischen jeweils einer Kopfnaht eines Beutels und einer Bodennaht eines nachfolgenden Beutels, einem Füllrohr zum Aufnehmen und Befüllen des Folienschlauches, einer gegen den Folienschlauch wirkenden Folientransporteinrichtung, sowie einem Produktrückhalter mit gegeneinander und gegen den Folienschlauch beweglichen Rückhalteelementen oberhalb der Quersiegelbacken, dadurch gekennzeichnet, daß der Produktrückhalter (18) zwei gegenläufig an jeweils einem Arm (55) um jeweils eine Achse (50) rotierende Rückhalteelemente (20) aufweist, und daß als Arm (55) des Rückhalteelementes (20) ein Teleskoparm (56) vorgesehen ist, der mittels einer Feder (57) radial zu seiner Achse (58) rückstellbar ist.

2. Vorrichtung nach Anspruch 1, dadurch gekennzeichnet, daß der Produktrückhalter (18) über ein Koppelglied (21) derart mit dem Backenstock (10) verbunden ist, daß eine Rotationsbewegung des Backenstocks (10) den Produktrückhalter (18) öffnet und schließt.

3. Vorrichtung nach Anspruch 2, dadurch gekennzeichnet, daß das Koppelglied (21) ein geschlossener Riemen (51) ist, der einerseits um eine mit einem Arm (52) einer Quersiegelbacke (4) starr verbundene Scheibe (53) umläuft, und andererseits um eine Scheibe (54) gleichen Durchmessers, welche starr mit einem Arm (55) eines Rückhalteelements (20) verbunden ist.

4. Vorrichtung nach Anspruch 2, dadurch gekennzeichnet, daß der Antrieb (65) des Produktrückhalters (18) über ein elektronisches Koppelglied (67) mit dem Antrieb (64) des Backenstocks (10) verbunden ist.

5. Vorrichtung nach mindestens einem der Ansprüche 1 bis 4, dadurch gekennzeichnet, daß zwischen den Antrieben (64, 65) eine Phasenverschiebungseinrichtung (68) zum Erzeugen einer Phasendifferenz zwischen den Antrieben (64, 65) vorgesehen ist.

6. Vorrichtung nach Anspruch 2, dadurch gekennzeichnet, daß der Produktrückhalter (18) zwei gegenläufig um jeweils eine Achse (50) rotierende Rückhalteelemente (20) aufweist, daß das Koppelglied (21) ein geschlossener Riemen (51) ist, der einerseits um eine mit einem Arm (52) einer Quersiegelbacke (4) starr verbundene Scheibe (53) umläuft, und andererseits um eine Scheibe (54) gleichen Umfangs, welche starr mit einem Arm (55) eines Rückhalteelements (20) verbunden ist.

7. Vorrichtung nach Anspruch 6, dadurch gekennzeichnet, daß eine Scheibe (53, 54) kreisförmig ausgestaltet ist, daß die andere Scheibe (53, 54) ein Ellipsoid (64) ist, und daß im Zeitpunkt des Gegeneinanderstoßens der Rückhalteelemente (20) der senkrecht zur Folientransportrichtung (67) gemessene Durchmesser (65) der Scheibe (54) des Produktrückhalters (18) größer als der entsprechende Durchmesser (66) der Scheibe (53) der Quersiegelbacken (4) ist.

8. Vorrichtung nach Anspruch 1, dadurch gekennzeichnet, daß als Rückhalteelement (20) eine Stange (60) aus einem deformierbaren Material (61) vorgesehen ist.

9. Vorrichtung nach Anspruch 1 oder Anspruch 8, dadurch gekennzeichnet, daß die Stange (60) nicht um ihre Längsachse (62) drehbar ist.

10. Vorrichtung nach Anspruch 1 oder Anspruch 8, dadurch gekennzeichnet, daß eine Stange (60) rechteckigen Querschnitts (63) als Rückhalteelement (20) vorgesehen ist.
